(19) **Europäisches Patentamt European Patent Office Office européen des brevets**

(11) **EP 1 259 091 B1**

(12) **EUROPEAN PATENT SPECIFICATION**

(45) Date of publication and mention
of the grant of the patent:
**20.02.2008 Bulletin 2008/08**

(51) Int Cl.:
**H04Q 7/38** (2006.01)

(21) Application number: **01610049.7**

(22) Date of filing: **15.05.2001**

(54) **Co-channel interference suppression by estimating the time of arrival**

Unterdrückung der Gleichkanalstorüng mittels Schätzung der Ankunftszeit

Suppression d'interférences co-canaux par estimation du temps d'arrivée

(84) Designated Contracting States:
**AT BE CH CY DE DK ES FI FR GB GR IE IT LI LU MC NL PT SE TR**

(43) Date of publication of application:
**20.11.2002 Bulletin 2002/47**

(73) Proprietor: **TELEFONAKTIEBOLAGET LM ERICSSON (publ)**
**164 83 Stockholm (SE)**

(72) Inventors:
• **Stenström, Niklas**
**252 20 Helsingborg (SE)**
• **Lindoff, Bengt**
**237 36 Bjärred (SE)**

(74) Representative: **Sigh, Erik et al**
**Zacco Denmark A/S,**
**Hans Bekkevolds Allé 7**
**2900 Hellerup (DK)**

(56) References cited:
**EP-A- 0 952 711**       **WO-A-00/13383**
**WO-A-96/11533**       **US-A- 5 933 768**

**Description**

**Technical field of the invention**

This invention relates to a method for cancelling or suppressing co-channel interference (CCI) in a wireless cellular communications system including at least two base stations using the same frequency, and to a mobile radio station such as a mobile communications device or a mobile telephone for use in such a communications system. The invention will be useful in TDMA and FDMA systems such as GSM and IS-136.

**Technical background**

In cellular wireless communications systems each base station covers a geographical area called a cell. Neighbouring cells usually use different frequencies. Frequencies can be reused in different cells, and cells using the same frequency are usually separated geographically by at least one intermediate cell using a different frequency. A mobile telephone or other mobile communications device in one cell, called the home cell, will normally be served by the base station, called the home base station, in the home cell. For two cells using the same frequency their mutual geographical distance may not always give sufficient attenuation of their signals to ensure that their signals do not interfere with each other, especially for hot spot areas, where frequencies need to be re-used for capacity reasons. Consequently, it may happen that, at some locations in the home cell, the mobile telephone can receive signals from a remote base station in a remote cell using the same frequency. The remote base station handles information or traffic, which is unrelated to the information or traffic handled by the home base station. When signals from two unrelated base stations using the same frequency are received by a mobile telephone, the signals from the remote base station may disturb or interfere with the signals received from the home base station. This is an undesired phenomenon called co-channel interference (CCI), and the remote base station is called a co-channel interferer.

It is the object of the invention to cancel or suppress co-channel interference.

US 5 515 378 discloses a method and an apparatus for increasing the capacity and the quality of communication between remote users and a base station. Co-channel interference is suppressed by using a directive transmitter antenna array directed to individual mobile stations.

WO 98/59443 discloses a method and a system in which co-channel base station are provided with a time reference signal being a synchronizing signal or a time reference from another co-channel radio base station.

US 5 317 323 discloses a system for accurately locating a mobile station using the Global Positioning System (GPS).

In general, in the state of the art systems for interference suppression, co-channel interferers are demodulated and interference symbols are subtracted from the received symbols. Co-channel interferers can be demodulated in several known ways. After the interference symbols have been subtracted from the received symbols, the remaining symbols are demodulated to extract the useful information from each burst or unit of transmitted signal.

In WO 00/13383 two interfering signals are separated from each other so that the information symbols from each of the two signals can be detected separately. A timing is estimated for each of the transmitted signals and the received (combined) signal is sampled in accordance with the estimated timings so that separate sample streams corresponding to each of the transmitted signals are produced. These separate sample streams are then used for detecting the information symbols from each transmitted signal separately.

**Problem to be solved by the invention**

None of the known solutions are fully feasible in a communications system using un-synchronised base stations, or in a system where the relative timing of the co-channel interferers is unknown. This is crucial to interference suppression efficiency. If this information is missing an extensive search for the pilot symbols or training sequences has to be carried out, which is a complex and power consuming operation. It is therefore the object of the invention to provide a more efficient method of co-channel interference suppression.

**Summary of the invention**

The invention provides improved suppression of co-channel interference in a wireless cellular communications system where at least two base stations use the same transmit frequency. Co-channel interference suppression requires knowledge of the desired channel, ie the transmissions from the home base station, and of the interfering co-channel for the co-channel interference suppression to be efficient. The mobile station knows the characteristics of the home channel, but in most cases the interfering co-channel is unknown, and its characteristics will therefore have to be estimated. Relevant transmission channel characteristics include in particular the channel impulse response and the relative time difference between the desired signal from the home base station and the signal from the interfering co-channel. According to the invention the relative time difference between the desired signal and the signal from the interfering co-channel is estimated by finding their synchronisation (short: sync.) positions, which is advantageously done by estimating their times of arrival, TOA.

The method according to the invention uses a modified known method of estimating time of arrival (TOA), which is already used for positioning, to estimate channel characteristics, in particular impulse response and sync. position. This enables the use of interference cancelling methods in communications systems using un-synchronised base stations. Receiver performance is improved, which in turn improves data throughput and received speech quality, since interfering signals from base stations using the same frequency can be suppressed. Alternatively, the capacity of the system can be increased by higher frequency reuse without sacrificing data throughput or speech quality.

**Brief description of the drawings**

Figure 1 shows the cell structure of a FDMA wireless communications system,

Figure 2 is a schematical block diagram of a digital receiver using TOA assisted interference suppression,

Figure 3 is a schematical flow chart showing the steps of interference suppression in accordance with the invention, and

Figure 4 shows schematically the relative timing of a received desired signal and a received interfering signal.

**Detailed description of the invention**

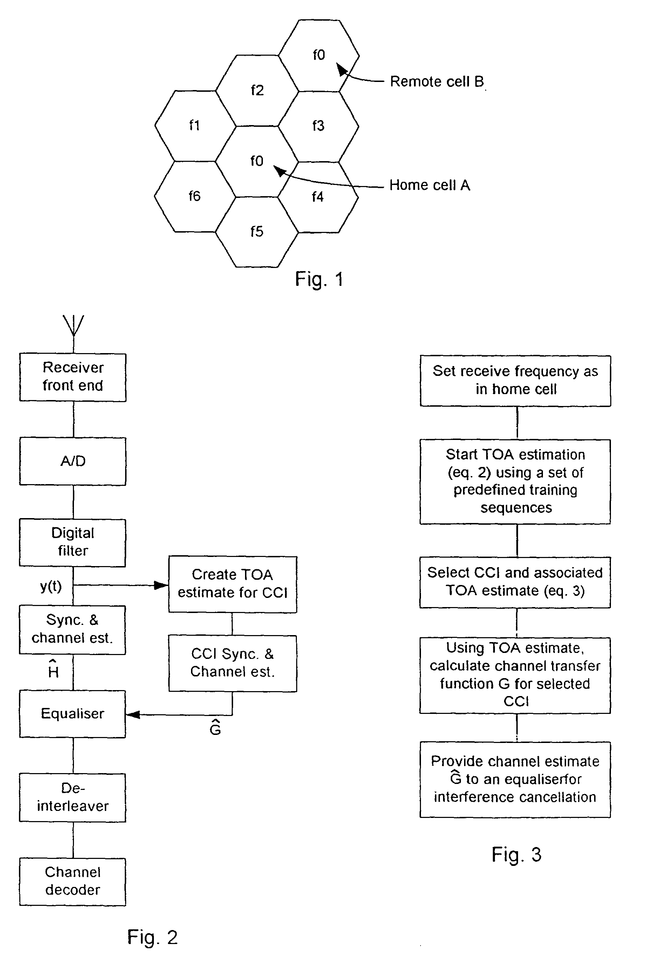

Figure 1 shows a home cell A in which the home base station uses the frequency $f_0$. A number of neighbouring cells (in this case six are shown) cover the geographical area around the home cell A, and the base stations in neighbouring cells use different frequencies $f_1$ to $f_6$, all of which in particular are also different from the frequency $f_0$ used in the home cell A. Further away from the home cell A and beyond the surrounding neighbouring cells is a remote cell B in which the remote base station uses the same frequency $f_0$ as is used in the home cell A. This is called frequency reuse. The remote base station in the remote cell B may thus cause co-channel interference to mobile stations in the home cell A.

Transmitted data are divided into bursts or short packets of data. Each burst includes a training sequence, which is a predefined sequence of bits occupying a predefined position in each burst. In the receiver the training sequence will be recognised as such and will be used as a synchronising signal identifying eg the start and stop positions of each burst. Base stations using the same transmit frequency use different training sequences. In addition to using different transmission frequencies neighbouring base stations may also use different training sequences.

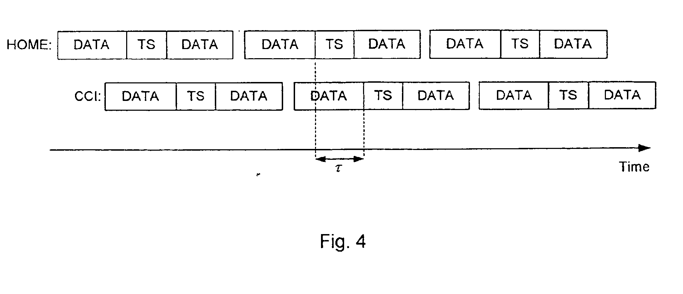

Figure 4 shows a received desired signal from the home base station and a received interfering signal CCI from a remote base station. Each signal consists of a series of bursts, where each burst contains two data sequences with a training sequence TS between the two data sequences. The time difference between the two signals is indicated as the time interval $\tau$ between the start of their respective training sequences.

The impulse response is the received signal that would result from a short impulse being transmitted from the transmitter. In practice several reflected signals will be received in addition to a direct line-of-sight signal, which is known as multi-path transmission. In a multi-path environment the impulse response will therefore have several "peaks" separated in time and with different amplitudes corresponding to the direct signal and several reflected signals being received with different delays. In particular, estimates of the impulse response and sync. position or timing of the co-channel are required.

In a communications system where the receive or downlink frequency is reused in two or more cells the frequency reuse may introduce interfering signals or noise in the serving cell or home cell from the remote base station in a neighbouring or remote cell using the same frequency. As a result the signals received by the mobile station in the home cell will contain information from other base stations as well as noise. With one co-channel interferer the received signal $\gamma(t)$ can be expressed mathematically as follows:

$$y(t) = \sum_{k=0}^{L} h_k u_{t-k} + \sum_{k=0}^{L} g_k v_{t-k} + e(t) = H^T U_t + G^T V_t + e_t \qquad (1)$$

where

$H^T = [h_0,...,h_L]^T$ is a complex-valued vector representing the radio channel of the home cell, $U_t = [u_t,...,u_{t-L}]^T$ is a complex-valued vector representing the transmitted symbols in the home cell,

$G^T = [g_0,...,g_L]^T$ is a complex-valued vector representing the radio channel for the CCI,

$V_t = [v_t,...,v_{t-L}]^T$ is a complex-valued vector representing the transmitted symbols of the CCI, and

$e_t$ is noise, which is often assumed to be white noise.

For the purpose of determining the geographical position of a mobile station it is known to determine the time of arrival (TOA) of signals received at the mobile station. In such methods the mobile station receives information from neighbouring base stations especially suitable for determination of position. In practice, and for capacity reasons, the TOA estimates are made for neighbouring base stations that use adjacent frequencies.

Co-channel interference suppression requires knowledge of the desired channel, ie the transmissions from the home base station, and of the interfering co-channel for the co-channel interference suppression to be efficient. The mobile station knows the characteristics of the home channel, but in most cases the interfering co-channel is unknown, and its characteristics will therefore have to be estimated. Relevant transmission channel characteristics include in particular the channel impulse response and the relative time difference between the desired signal from the home base station and the signal from the interfering co-channel. According to the invention the relative time difference between the desired signal and the signal from the interfering co-channel is estimated by finding their sync. positions, which is advantageously done by estimating their times of arrival, TOA.

Estimating time of arrival (TOA) can eg be carried out as follows. Given a specific training sequence, collect estimates of channel characteristics for the current and previously received bursts, $H_{vector} = [H_t, H_{t+1},...,H_{t+N}]$, where each $H_k$ is the channel estimate for burst k and consists of complex-valued channel taps $H_k = [h_{k,0}, h_{k,1},...,h_{k,L}]$. For each tap $|\overline{H}|^2$ is calculated:

$$|\overline{H}|^2 = \left[ \sum_{i=0}^{N} |H_{i,0}|^2, \sum_{i=0}^{N} |H_{t,1}|^2, ..., \sum_{i=0}^{N} |H_{i,L}|^2 \right] = \left[ |\overline{H}_0|^2, |\overline{H}_1|^2, ..., |\overline{H}_L|^2 \right] \qquad (2)$$

The TOA estimate is used as an estimate of the sync. position, and is calculated as the position, $i$, for which the energy

$$E = |\overline{H}_i|^2; i \in [0, L] \qquad (3)$$

is maximised. The reference [1] gives more details on this.

The timing of a co-channel interferer can be obtained by modifying the above method used in TOA measurements. Originally, TOA measurements were used for positioning purposes and for estimating the synchronisation position for a list of base stations, whose signals and related training sequences are received by the mobile station. For each base station in the list a TOA estimate, ie an estimate of the timing of the base station, is made. Together with geographical information the TOA is then used to calculate the position of the mobile station relative to the base stations. The list of base stations is selected such that the TOA estimates will produce a reliable result in terms of positioning performance. In a typical operation scenario the list includes neighbouring base stations using other frequencies than the base station home in the home cell.

The desired signal A from the home base station is usually much stronger than the interfering signal from the co-channel. The sync. position of the desired signal is therefore calculated or estimated using only a short time correlation, typically only over one burst. For this purpose known standard correlation methods can be used.

Due mainly to the distance from the remote base station the interfering signal from the co-channel is usually a weak signal. In order to obtain a proper estimate of the timing of the interfering signal it is therefore necessary to use a longer time correlation, usually over many bursts. This is used in the invention Figures 2 and 3 illustrate the invention. According to the invention a TOA calculation is switched on, performed during normal reception, and used for estimating the timing and sync. position of the co-channel interfering base station. In cases where the training sequence of the worst co-channel interferer is unknown, the average channel impulse response according to equation (2) above has to be carried out for each of the training sequences used by the co-channel interferer. Selection of a TOA estimate $\tau$ and which training sequence to use is then made jointly according to the criterion in equation (3) above.

When accurate timing information of the co-channel interferer is thus obtained the timing information is fed to a Sync. and Channel estimation unit that uses the timing information to calculate the current channel impulse response for the CCI. This information is then used in an equaliser for interference suppression that removes or suppresses the CCI signals.

In case of lack of information on the CCI training sequence, which is provided by the network, a search over all possible pilot sequences will have to be carried out.

**Reference**

[1] H. Murata, S. Yoshida: Maximum-Likelihood Sequence Estimation USA, 1996, 3rd vol xxxix+1887 pp 701-705 vol.2.

**Claims**

1. A method of suppressing co-channel interference (CCI) in a mobile station when used in a wireless cellular communications system including at least a home base station and a remote base station both using the same transmit frequency ($f_0$), the method comprising the following steps:

   • receiving a signal transmitted from the home base station,
   • setting a receive frequency of the mobile station to the transmit frequency ($f_0$) of the home base station, and, if a signal from a remote base station is received, performing the following steps:

   • determining a synchronisation time for the signal received from the home base station as an estimated time of arrival of the start of a training sequence in the signal received from the home base station,
   • determining a synchronisation time for the signal received from the remote base station as an estimated time of arrival of the start of a training sequence in the signal received from the remote base station, - determining the time difference ($\tau$) between the synchronisation time for the received signal from the home base station and the synchronisation time for the received signal from the remote base station,
   • calculating from the determined time difference ($\tau$) a current channel impulse response for the co-channel interference, and
   • suppressing the co-channel interference in an equaliser under use of the calculated current channel impulse response.

2. A method according to claim 1 wherein the synchronisation times for the received signals are determined by estimating their respective times of arrival (TOA) at the mobile station.

3. A method according to claim 2 wherein the synchronisation time for the received signal from the home base station is determined using a short-term correlation over the signal from the home base station.

4. A method according to claim 3 wherein the estimation of time of arrival (TOA) involves detecting predefined known training sequences (TS) of data in the signal from the home base station.

5. A method according to claim 2 wherein the synchronisation time for the received signal from the remote base station is determined using a long-term correlation over the signal from the remote base station.

6. A method according to claim 5 wherein the estimation of time of arrival (TOA) involves detecting predefined known training sequences (TS) of data in the signal from the remote base station.

7. A mobile station for use in a wireless cellular communications system including at least two base stations using the same frequency ($f_0$), the mobile station comprising means for performing the steps of a method according to any one of claims 1-6.

**Patentansprüche**

1. Verfahren zur Unterdrückung von Co-Kanal-Interferenz (CCI) in einer Mobilstation, wenn diese in einem drahtlosem Zellularkommunikationssystem benutzt wird, mit zumindest einer Heimatbasisstation und einer entfernten Basisstation, die beide dieselbe Übertragungsfrequenz ($f_0$) benutzen, wobei das Verfahren die folgenden Schritte beinhaltet:

Empfangen eines Signals, das von der Heimatbasisstation übertragen wird;

Einstellen einer Empfangsfrequenz der Mobilstation auf die Übertragungsfrequenz ($f_0$) der Heimatbasisstation und, wenn ein Signal von einer entfernten Basisstation empfangen wird, die Ausführung der folgenden Schritte;

Bestimmen einer Synchronisationszeit für das von der Heimatbasisstation empfangene Signal, als eine geschätzte Zeit für die Ankunft des Starts einer Trainingssequenz in dem von der Heimatbasisstation empfangenen Signal;

Bestimmen einer Synchronisationszeit für das von der entfernten Basisstation empfangene Signal, als eine geschätzte Zeit für die Ankunft des Starts einer Trainingssequenz in dem von der entfernten Basisstation empfangenen Signal;

Bestimmung der Zeitdifferenz ($\tau$) zwischen der Synchronisationszeit für das empfangene Signal von der Heimatbasisstation und der Synchronisationszeit für das empfangene Signal von der entfernten Basisstation;

Berechnen einer aktuellen Kanalimpulsantwort für die Co-Kanal-Interferenz aus der bestimmten Zeitdifferenz ($\tau$); und

Unterdrücken der Co-Kanal-Interferenz in einem Entzerrer unter Benutzung der berechneten aktuellen Kanalimpulsantwort.

2. Verfahren nach Anspruch 1, wobei die Synchronisationszeiten für die empfangenen Signale durch ein Schätzen der jeweiligen Ankunftszeiten (TOA) bei der Mobilstation bestimmt werden.

3. Verfahren nach Anspruch 2, wobei die Synchronisationszeit für das von der Heimatstation empfangene Signal mit Verwendung einer Kurzzeitkorrelation über das Signal von der Heimatbasisstation bestimmt wird.

4. Verfahren nach Anspruch 3, wobei die Schätzung der Ankunftszeit (TOA) ein Detektieren vorbestimmter bekannter Trainingssequenzen (TS) von Daten in dem Signal von der Heimatbasisstation einschließt.

5. Verfahren nach Anspruch 2, wobei die Synchronisationszeit für das empfangene Signal von der entfernten Basisstation durch eine Langzeitkorrelation über das Signal von der entfernten Basisstation bestimmt wird.

6. Ein Verfahren nach Anspruch 5, wobei die Schätzung der Ankunftszeit (TOA) ein Detektieren vorbestimmter bekannter Trainingssequenzen (TS) von Daten in dem Signal von der entfernten Basisstation einschließt.

7. Eine Mobilstation zur Nutzung in einem drahtlosen Zellularkommunikationssystem, welches zumindest zwei Basisstationen enthält, die dieselbe Frequenz ($f_0$) benutzen, wobei die Mobilstation Einrichtungen zur Durchführung der Schritte eines Verfahrens gemäß einem der Ansprüche 1-6 enthält.

**Revendications**

1. Procédé de suppression des interférences de co-canal (CCI, pour « *Co-Channel Interference* ») sur une station mobile utilisée dans un système de communication cellulaire sans fil comprenant au moins une station de base de rattachement et une station de base distante, toutes deux utilisant la même fréquence d'émission ($f_0$), le procédé comprenant les étapes consistant à :

- recevoir un signal émis par la station de base de rattachement ;
- régler une fréquence de réception de la station mobile sur la fréquence d'émission ($f_0$) de la station de base de rattachement et, si un signal est reçu d'une station de base distante, exécuter les étapes consistant à :

- déterminer un instant de synchronisation pour le signal reçu de la station de base de rattachement comme l'instant estimé d'arrivée du début de la séquence d'apprentissage dans le signal reçu de la station de base de rattachement ;
- déterminer un instant de synchronisation pour le signal reçu de la station de base distante comme l'instant estimé d'arrivée du début de la séquence d'apprentissage dans le signal reçu de la station de base distante ;
- déterminer la différence de temps ($\tau$) entre l'instant de synchronisation du signal reçu de la station de base de rattachement et l'instant de synchronisation du signal reçu de la station de base distante ;

- calculer à partir de la différence de temps ($\tau$) déterminée une réponse impulsionnelle courante du canal pour l'interférence de co-canal ; et
- supprimer l'interférence de co-canal dans un égaliseur, en utilisant la réponse impulsionnelle courante de canal qui a été calculée.

2. Procédé selon la revendication 1, dans lequel les instants de synchronisation des signaux reçus sont déterminés en estimant leurs instants d'arrivée (TOA, pour « *Time Of Arrival* ») respectifs à la station mobile.

3. Procédé selon la revendication 2, dans lequel l'instant de synchronisation du signal reçu de la station de base de rattachement est déterminé en utilisant une corrélation à court terme sur le signal provenant de la station de base de rattachement.

4. Procédé selon la revendication 3, dans lequel l'estimation de l'instant d'arrivée (TOA) comprend la détection de séquences prédéfinies d'apprentissage (TS, pour « *Training Sequences* ») de données connues, dans le signal provenant de la station de base de rattachement.

5. Procédé selon la revendication 2, dans lequel l'instant de synchronisation du signal reçu de la station de base distante est déterminé en utilisant une corrélation à long terme sur le signal provenant de la station de base distante.

6. Procédé selon la revendication 5, dans lequel l'estimation de l'instant d'arrivée (TOA) comprend la détection de séquences prédéfinies d'apprentissage (TS) de données connues, dans le signal provenant de la station de base distante.

7. Station mobile destinée à être utilisée dans un système de communication cellulaire sans fil comprenant au moins deux stations de base utilisant la même fréquence ($f_0$), la station mobile comprenant un moyen destiné à exécuter les étapes d'un procédé selon l'une quelconque des revendications 1 à 6.

Fig. 1

Fig. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5515378 A
- WO 9859443 A
- US 5317323 A
- WO 0013383 A

### Non-patent literature cited in the description

- **H. MURATA ; S. YOSHIDA.** *Maximum-Likelihood Sequence Estimation USA,* 1996, vol. 2, 701-705